# EUROPEAN PATENT SPECIFICATION

(11) **EP 2 483 104 B1**
(45) Date of publication and mention of the grant of the patent: **20.12.2017**
(21) Application number: 10771561.7
(22) Date of filing: 04.10.2010
(51) Int. Cl.: B60N 3/00

(54) **SYSTEM AND METHOD FOR INTERACTING WITH INFORMATION SYSTEMS**
SYSTEM UND VERFAHREN ZUR INTERAKTION MIT INFORMATIONSSYSTEMEN
SYSTÈME ET PROCÉDÉ POUR INTERAGIR AVEC DES SYSTÈMES D'INFORMATIONS

(30) Priority: 02.10.2009 US 278175 P
(43) Date of publication of application: 08.08.2012
(73) Proprietor: Panasonic Avionics Corporation, Lake Forest CA 92630-8400 (US)
(72) Inventor: SIZELOVE, Steven, L., Woodinville Washington 98072 (US)
(74) Representative: Appelt, Christian W.
(86) International application number: PCT/US2010/051360
(87) International publication number: WO 2011/041797

(56) References cited:
- DE-A1- 10 118 496
- US-A1- 2006 075 934
- US-A1- 2008 024 463
- US-B1- 6 929 218
- letVAfly's channel: "Virgin America's IFE - letVAfly.com", , 18 January 2007 (2007-01-18), XP054976011, Retrieved from the Internet: URL:https://www.youtube.com/watch?v=609i-O hFhoQ [retrieved on 2015-08-06]

## Description

### FIELD

The present disclosure relates generally to travel information systems and more particularly, but not exclusively, to aircraft in-flight entertainment systems for providing an enhanced travel experience.

### BACKGROUND

Passenger vehicles, such as automobiles and aircraft, often include vehicle information systems for satisfying passenger demand for access to viewing content, such as entertainment, information content, or other viewing content, while traveling.

Conventional vehicle information (or entertainment) systems typically include overhead cabin video systems or seat-based video systems with individual controls such that viewing content is selectable by the passengers. The viewing content can include audio and video content that is derived from a variety of content sources. Prerecorded viewing content, such as motion pictures and music, can be provided by internal content sources, such as audio and video players, that are installed aboard the vehicle. The conventional vehicle information systems likewise can include an antenna system for receiving viewing content, such as live television programming and/or Internet content, transmitted from one or more content providers (or sources) that are external to, and/or remote from, the vehicle.

Such conventional vehicle information systems, however, suffer from numerous disadvantages. Some passengers find the vehicle information systems to be complicated to operate and the viewing content difficult to enjoy. Selection of the viewing content, for example, can prove difficult due to the awkward placement and operation of the user controls. Conventional vehicle information systems require integrated handsets (or passenger control units) for permitting passengers to interact with the vehicle information systems. These handsets support basic system control functions, such as channel control, volume control, menu navigation, and text input, but present several limiting drawbacks including cost, weight, ease of use, limited feature customization, comfort, and complexity. Conventional vehicle information systems further require a plurality of interface points and multiple cables, such as left audio, right audio, video, data, and/or power, for communicating with passengers' handheld personal media devices and do not support remote control via these personal media devices. Such system shortcomings are a frequent source of passenger complaints during travel.

US 2008/024463 A1, 31 January 2008, is directed to a method for displaying and inputting information to a computer comprising providing a video projector to project visual information generated using a computer onto a display screen, said screen being movable with respect to said projector. This document discloses front-projection to project content on a surface which is itself used as input device for the user.

In view of the foregoing, a need exists for an improved vehicle information system and method that provides versatile and intuitive user controls in an effort to overcome the aforementioned obstacles and deficiencies of conventional vehicle information systems.

### BRIEF DESCRIPTION OF THE DRAWINGS

Fig. 1A is an exemplary top-level drawing illustrating an embodiment of a touch film interface system for interacting with a computer system, wherein the touch film interface system is provided via a food tray installed at a user seat.
Fig. 1B is an exemplary top-level drawing illustrating the touch film interface system of Fig. 1A, wherein the food tray is in a stowed position.
Fig. 2 is an exemplary detail drawing illustrating an embodiment of the touch film interface system of Figs. 1A-B, wherein the touch film interface system includes a face plate that can be removably coupled with a base.
Fig. 3 is an exemplary detail drawing illustrating an alternative embodiment of the touch film interface system of Fig. 2, wherein a plurality of face plates can be alternatively coupled with the base.
Fig. 4 is an exemplary detail drawing illustrating an alternative embodiment of the touch film interface system of Figs. 1A-B, wherein the touch film interface system includes a capacitive sensor system that is affixed to the base.
Fig. 5A is an exemplary detail drawing illustrating an embodiment of the touch film interface system of Fig. 4, wherein the touch film interface system includes projection system disposed at an overhead area above the user seat.
Fig. 5B is an exemplary detail drawing illustrating an alternative embodiment of the touch film interface system of Fig. 4, wherein the projection system is provided in combination with a lighting system for the user seat.
Fig. 5C is an exemplary detail drawing illustrating another alternative embodiment of the touch film interface system of Fig. 4, wherein the projection system is disposed at a seatback of the user seat.
Fig. 5D is an exemplary detail drawing illustrating still another alternative embodiment of the touch film interface system of Fig. 4, wherein the projection system is coupled with the food tray of the user seat.
Fig. 6A is an exemplary detail drawing illustrating still another alternative embodiment of the touch film interface system of Fig. 4, wherein the touch film interface system includes at least one communication port.
Fig. 6B is an exemplary detail drawing illustrating an alternative embodiment of the touch film interface system of Fig. 6A, wherein the communication port comprises a peripheral device port.
Fig. 7 is an exemplary detail drawing illustrating an alternative embodiment of the touch film interface system of Fig. 6B, wherein the touch film interface system includes a memory card reader.
Figs. 8A-H are exemplary detail drawings illustrating one embodiment of a method for manufacturing the touch film interface system of Fig. 7.
Fig. 9 is an exemplary detail drawing illustrating an embodiment of an information system, wherein the touch film interface system of Fig. 1 or Fig. 4 is used in conjunction with a video presentation system and/or an audio presentation system for interacting with the computer system.
Fig. 10A is an exemplary detail drawing illustrating an alternative embodiment of the information system of Fig. 9, wherein interaction with the computer system is provided solely via the touch film interface system.
Fig. 10B is an exemplary detail drawing illustrating an embodiment of the touch film interface system of Fig. 10A, wherein the touch film interface system includes an input region and a video presentation region.
Fig. 11 is an exemplary detail drawing illustrating an alternative embodiment of the information system of Fig. 10A, wherein the touch film interface system can be coupled with a personal media device for facilitating interaction with the computer system.
Fig. 12A is an exemplary detail drawing illustrating an embodiment of the touch film interface system of Figs. 1A-B, wherein the face plate provides an English-language keyboard.
Fig. 12B is an exemplary detail drawing illustrating an alternative embodiment of the touch film interface system of Figs. 1A-B, wherein the face plate provides an Arabic-language keyboard.
Fig. 12C is an exemplary detail drawing illustrating another alternative embodiment of the touch film interface system of Figs. 1A-B, wherein the face plate provides keyboard that supports a plurality of languages.

It should be noted that the figures are not drawn to scale and that elements of similar structures or functions are generally represented by like reference numerals for illustrative purposes throughout the figures. It also should be noted that the figures are only intended to facilitate the description of the preferred embodiments. The figures do not illustrate every aspect of the described embodiments and do not limit the scope of the present disclosure.

### DETAILED DESCRIPTION OF THE PREFERRED EMBODIMENTS

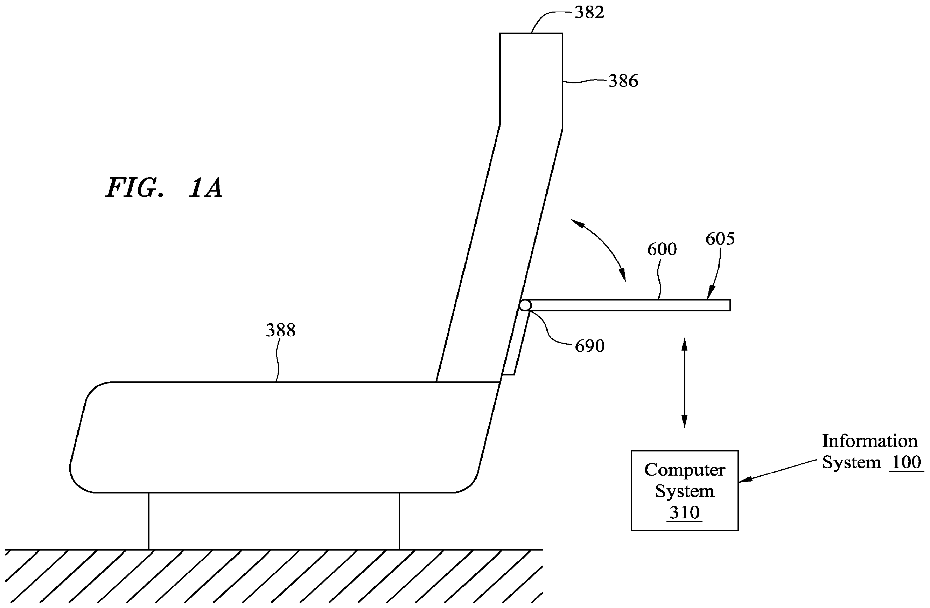

Since currently-available vehicle information systems require passengers to use integrated handsets that are expensive, heavy, difficult to use, and cannot be customized, an information system that supports passenger interaction via touch film food trays and tables can prove desirable and provide a basis for a wide range of system applications, such as vehicle information systems for use aboard automobiles, aircraft, and other types of vehicles during travel. This result can be achieved, according to one embodiment disclosed herein, by a touch film interface system 600 as illustrated in Figs. 1A-B.

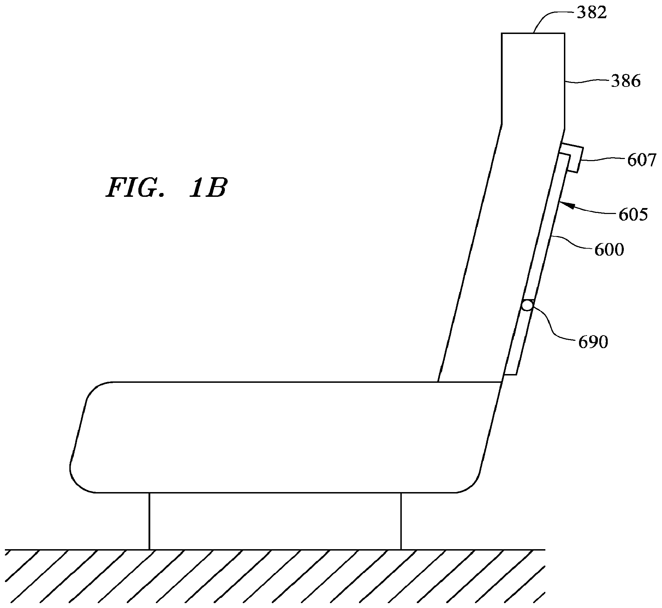

Turning to Figs. 1A-B, the touch film interface system 600 is illustrated as being provided via a food tray 605 installed at a seatback 386 of a user seat 382. The food tray 605 can be provided in any conventional manner and preferably is adjustably coupled with the seatback 386, such as via a hinge 690. Thereby, the food tray 605 can transition between a deployed position as shown in Fig. 1A and a stowed position as shown in Fig. 1B. The user seat 382 is shown in Fig. 1B as including a tray latch assembly 607 for securing the food tray 605 in the stowed position. Although shown and described herein as being installed at the seatback 386 for purposes of illustration only, the touch film interface system 600 can be disposed at any suitable region, such as an armrest 388, of the user seat 382.

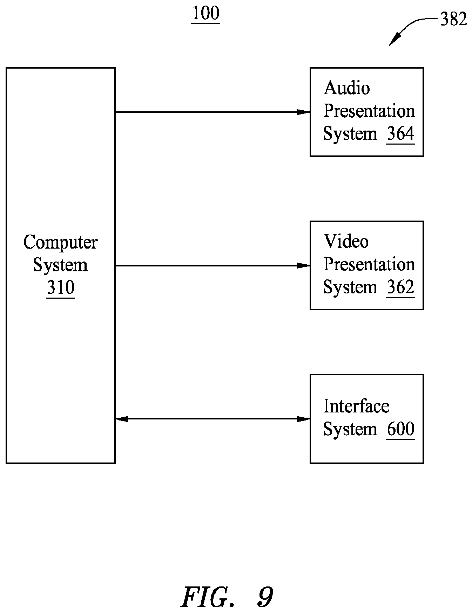

The touch film interface system 600 advantageously can enable a user to interact with a computer system 310. As desired, the user seat 382 likewise can include a video presentation system 362 (shown in Fig. 9), such as a seatback display system, and/or an audio presentation system 364 (shown in Fig. 9) for facilitating the user's interaction with the computer system 310. The video presentation system 362 and the audio presentation system 364 can respectively present a video portion and an audio portion of viewing content 210 or other information provided by the computer system 310 in a conventional manner. The computer system 310 can be provided as a conventional computer system, including a stand-alone computer system and/or as a component of an information system 100.

In one embodiment, the computer system 310 can comprise a server system associated with a vehicle information system such as a conventional aircraft passenger in-flight entertainment system, such as the Series 2000, 3000, eFX, and/or eX2 in-flight entertainment system as manufactured by Panasonic Avionics Corporation (formerly known as Matsushita Avionics Systems Corporation) of Lake Forest, California. In other words, the user seat 382 can be configured for installation aboard a wide variety of passenger vehicles for use by a passenger during travel. Exemplary types of passenger vehicles can include an automobile, an aircraft, a bus, a recreational vehicle, a passenger boat or ferry, and/or a passenger train, or any other type of passenger vehicle without limitation.

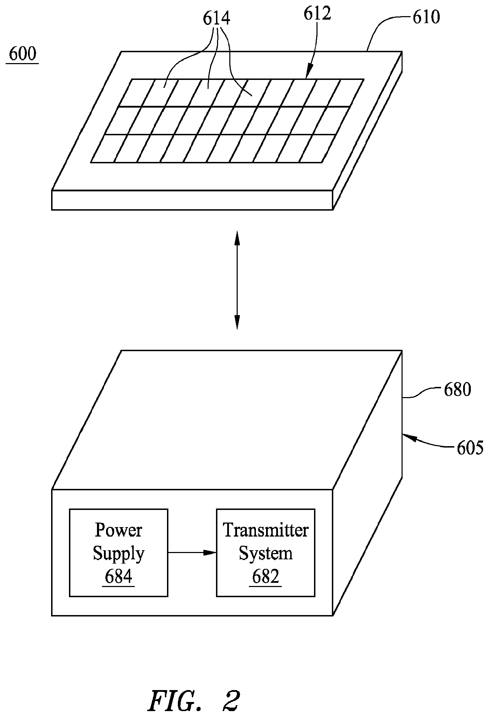

One preferred embodiment of the touch film interface system 600 is shown in Fig. 2. The touch film interface system 600 is shown as including a touch film system (or face plate) 610 and a base 680. The face plate 610 is formed from a touch film material, such as a capacitive touch film material, and provides a user interface system, such as a keyboard 612. The keyboard 612 can comprise any conventional type of keyboard, such as a computer keyboard and/or a piano keyboard, and includes a plurality of keys 614.

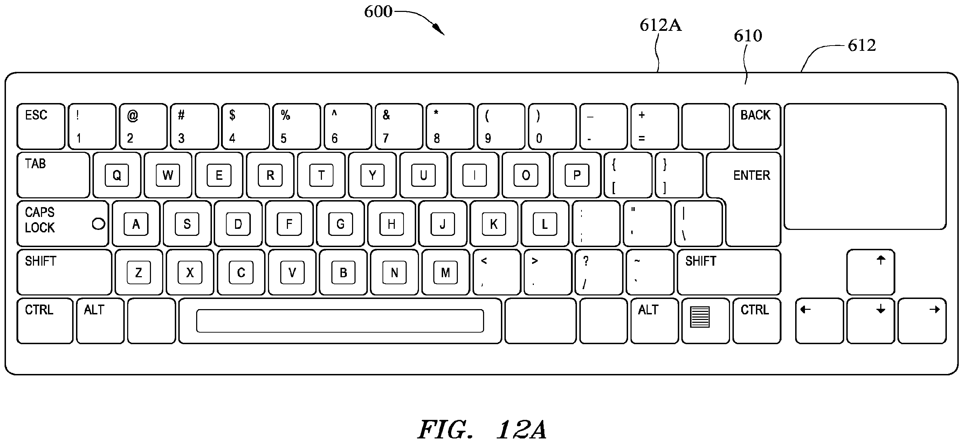

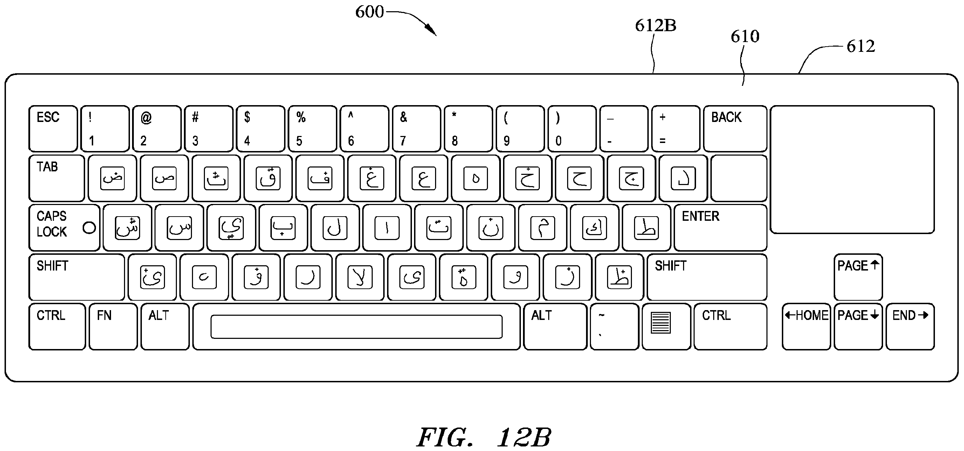

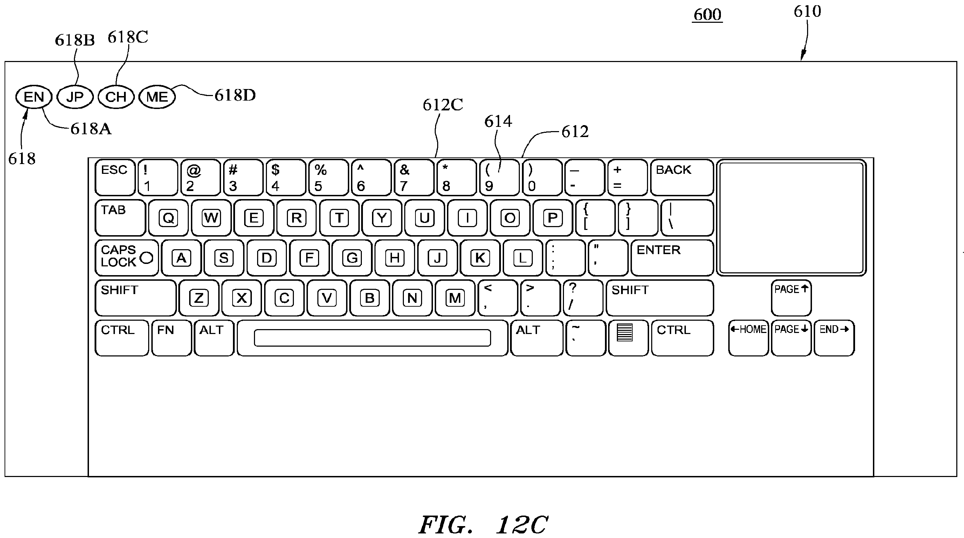

As appropriate, the keys 614 can be provided with any desired regional key layout. If comprising a computer keyboard, for example, the keyboard 612 can provide a conventional English-language keyboard 612A (shown in Fig. 12A), a conventional Arabic-language keyboard 612B (shown in Fig. 12B), and/or a keyboard of any other selected language. Alternatively, and/or additionally, the keyboard 612 can be configured to support a plurality of different languages. Fig. 12C shows a keyboard 612C, wherein the keyboard language can be selectable controlled via a plurality of language control buttons 618. Each language control button 618 is associated with a different language and, when activated, enables the keyboard 612C to be adapted to support the selected language. In other words, the language control buttons 618 enable the keyboard 612C to present the keyboard keys 614 with a key arrangement and with language characters that are consistent with selected language.

As illustrated in Fig. 12C, language control buttons 618A-D can be associated with conventional keyboard layouts associated with the English, Japanese, Chinese, and Arabic languages, respectively. In one embodiment, the keyboard 612 can provide tactile feel since the keys 614 are raised and "clickable." Although shown and described as comprising a keyboard 612 for purposes of illustration only, the user interface system provided by the face plate 610 can include any suitable number of conventional user interface components, such as a keypad, a game pad, and/or a pointing device (i.e., a mouse, trackball, or stylus).

Returning to Fig. 2, when disposed on the base 680, the face plate 610 can be automatically detected by the base 680 and/or the face plate 610 can be manually selected by the user. The touch film interface system 600 can identify the face plate 610 and can provide configuration information to the computer system 310 (shown in Fig. 1A). The computer system 310 thereby can be configured to communicate with the touch film interface system 600. In one embodiment, the configuration information can include regional information such that textual information presented via the video presentation system 362 (shown in Fig. 9) and/or audible information presented via the audio presentation system 364 (shown in Fig. 9) is presented in a language that is consistent with the language associated with the face plate 610.

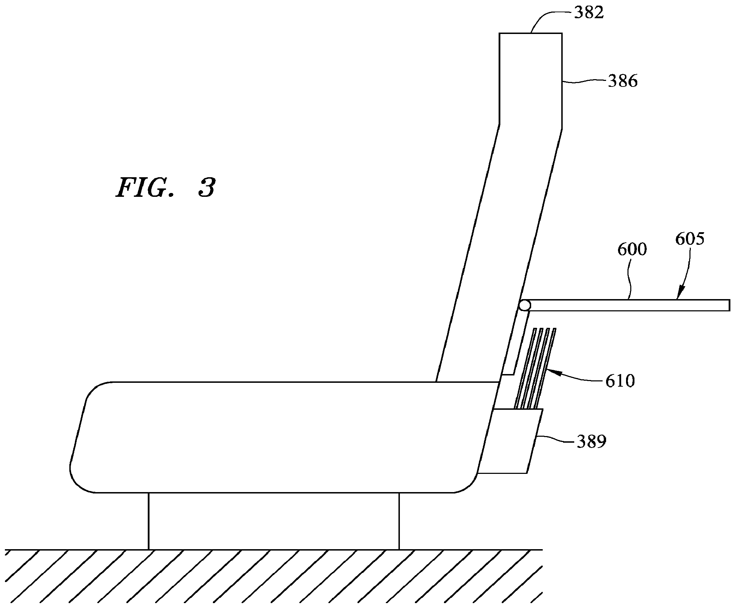

Turning briefly to Fig. 3, the touch film interface system 600 advantageously can include a plurality of face plates 610. Each face plate 610 provides a different type of keyboard 612 (shown in Fig. 2) and can be alternatively coupled with the base 680 (shown in Fig. 2). The touch film interface system 600 thereby can readily support a diverse range of keyboard types, layouts, and/or languages. Additionally, and/or alternatively, the touch film interface system 600 can include a plain face plate 610. The plain face plate 610 can include no keys 614 (shown in Fig. 2) and can be suitable for use during dining. In other words, the plain face plate 610 enables the food tray 605 to be used as a food tray. Thereby, when preparing for a meal, the user can remove selected face plate 610 with a keyboard 612 from the base 680 and install the plain face plate 610 on the base 680. After the meal, the plain face plate 610 can be removed from the base 680 and the selected face plate 610 can be reinstalled on the base 680.

The face plates 610 can be stored and/or distributed in any conventional manner. For example, the unused face plates 610 can be stored in a storage compartment 389, such as a literature pocket, at the user seat 382. Alternatively, and/or additionally, the base 680 can include a compartment (not shown) for storing the unused face plates 610, and/or a mechanism (not shown) for deploying a selected face plate 610 from the compartment. If the user seat 382 is disposed aboard a passenger vehicle, the unused face plates 610 can be stored aboard the passenger vehicle, and a member of the vehicle crew can distribute face plates 610 among the passengers as desired.

Returning to Fig. 2, the base 680 is shown as including a transmitter system 682. Although the touch film interface system 600 and the computer system 310 can be configured to communicate in a wired manner, such as via an Ethernet protocol, a Universal Serial Bus (USB) protocol, or any other conventional wired protocol, the touch film interface system 600 preferably supports wireless communications with the computer system 310. Exemplary wireless communication protocols can include the ZigBee protocol, the WirelessHART protocol, and/or the MiWi protocols, which are based upon Institute of Electrical and Electronics Engineers (IEEE) Standard 802.15.4-2006. The use of wireless communications advantageously avoids problems, such as broken wires, associated with wired communications and/or can enable the user to easily remove the touch film interface system 600 from the user seat 382 (shown in Figs. 1A-B). The touch film interface system 600 thereby can be placed upon the user's lap, as desired, to make typing more comfortable.

The transmitter system 682 can be powered in any conventional manner. Power for the transmitter system 682, for example, can be provided from a power source external to the touch film interface system 600 and/or the user seat 382. As illustrated in Fig. 2, the touch film interface system 600 alternatively can include an internal power supply 684, such as standard batteries and/or rechargeable batteries, that is disposed within the base 680. In one embodiment, the internal power supply 684 comprises one or more ultracapacitors. Advantageously, ultracapacitors are a green energy source, are instantly chargeable, never wear out, and therefore never need to be replaced.

The power supply 684 preferably can be recharged when the touch film interface system 600 is not in use. For example, the user seat 382 can include a charging system (not shown) for recharging the power supply 684. The power supply 684 of the touch film interface system 600 thereby can be recharged when the food tray 605 is disposed in the stowed position as illustrated in Fig. 1B. In one embodiment, the charging system can be incorporated into the tray latch assembly 607 of the user seat 382.

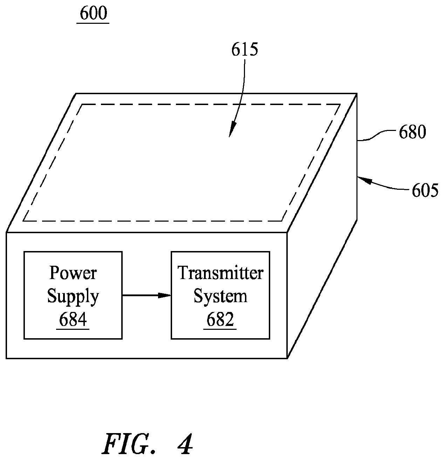

An alternative embodiment of the touch film interface system 600 is illustrated in Fig. 4. As shown in Fig. 4, the base 620 can be provided in the manner set forth above with reference to Fig. 2. At least one selected surface, such as a top surface, of the base 620 is provided with a touch film system (or layer), such as a capacitive sensor system 615. The capacitive sensor system can be disposed at the base 620 in any conventional manner. The capacitive sensor system 615, for example, can be formed, bonded, adhered, or otherwise affixed on the base 620. Although the capacitive sensor system 615 can be provided with any selected geometry as desired, the capacitive sensor system 615 is illustrated as being planar.

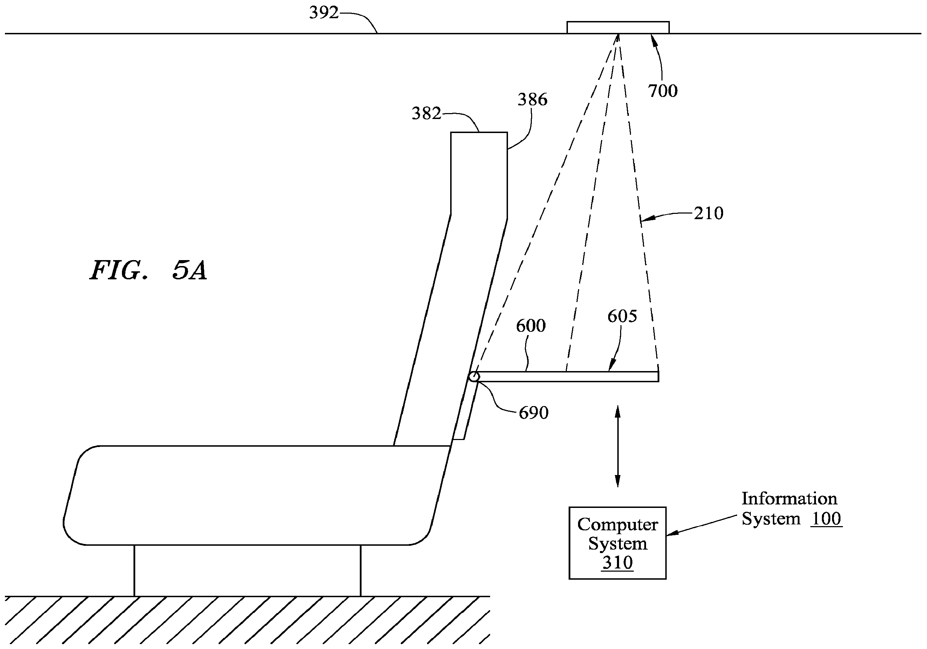

The touch film interface system 600 can be used in conjunction with a projection system 700, such as a pico projection system, as illustrated in Figs. 5A-D. The projection system 700 shines selected viewing content 210, such as a menu system or other application, onto the capacitive sensor system 615 of the base 620. In a travel environment, the touch film interface system 600 thereby can be used to offer digital magazines, books, casual games, networked casual games, flight information, music information, photo editing and viewing, movies and many more. The capacitive sensor system 615 is tuned to the projected content 210 such that the computer system 310 can correlate the projected content 210 with associated regions of the capacitive sensor system 615.

If the projection system 700 is projecting a menu system, for example, the computer system 310 can determine the selected menu option based when the user touches a corresponding region of the capacitive sensor system 615. To navigate the menu, the user can touch the desired selection and/or can move their finger along the tray to scroll through extended options. When a menu item is touched, the application can begin and can be presented via the touch film interface system 600 and/or the video presentation system 362 (shown in Fig. 9) and/or the audio presentation system 364 (shown in Fig. 9) disposed at the user seat 382. Some applications are directed toward multiplayer events, wherein both users initiate the same application.

In the manner set forth in more detail above with reference to Fig. 2, the touch film interface system 600 can provide a keyboard interface 612 (shown in Fig. 2). Since the keyboard 612 is projected, the keyboard 612 can be provided in several regional formats and in various shapes (numbers only, text only, etc) as discussed above. The keyboard embodiment of the touch film interface system 600 advantageously can enable a virtual docking of the user's personal media device, such as a portable computer or smart mobile device. For example, the personal media device can be connected with the touch film interface system 600 via a wired and/or wireless interface, and then placed away out of sight while the keyboard and the in-seat video presentation system 362 are used to interact with and manipulate data on the touch film interface system 600.

The projection system 700 can be disposed at any suitable location relative to the capacitive sensor system 615 as long as the projected content 210 can be projected onto the capacitive sensor system 615. Turning to Fig. 5A, for example, the projection system 700 is illustrated as being disposed above the user seat 382. The projected content 210 can be projected downwardly onto the capacitive sensor system 615 as shown in Fig. 5A. If the touch film interface system 600 is installed aboard a passenger vehicle, for example, the projection system 700A can be disposed within a vehicle overhead structure 392, such as a ceiling, within the passenger cabin.

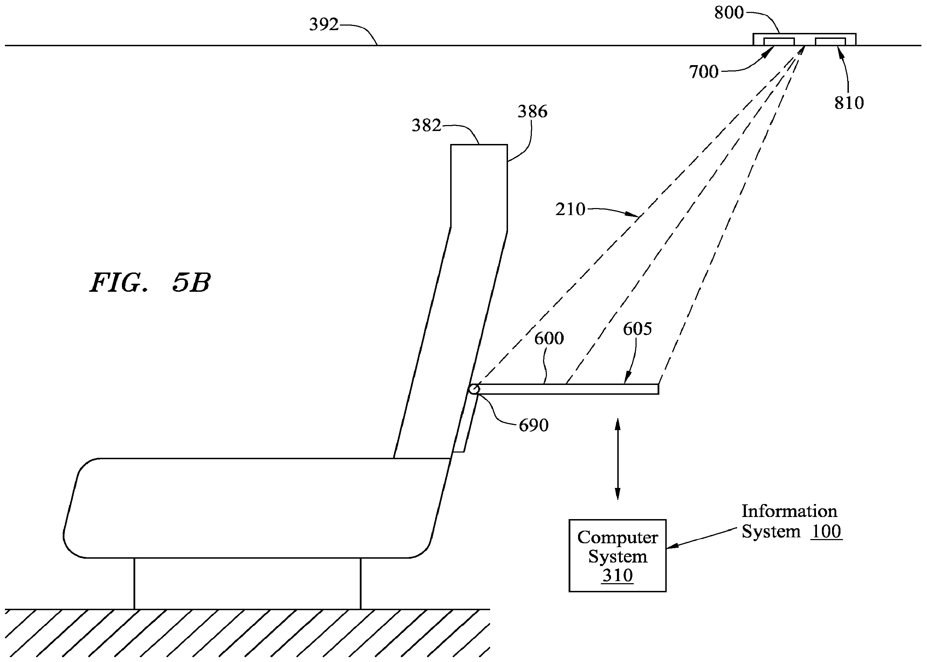

As desired, the projection system 700 can be integrated with one or more other information system components. Fig. 5B, for example, shows that the projection system 700 can be integrated with a lighting system 810. In the illustrated embodiment, the projection system 700 and the lighting system 810 are integrated into a projector/light assembly 800.

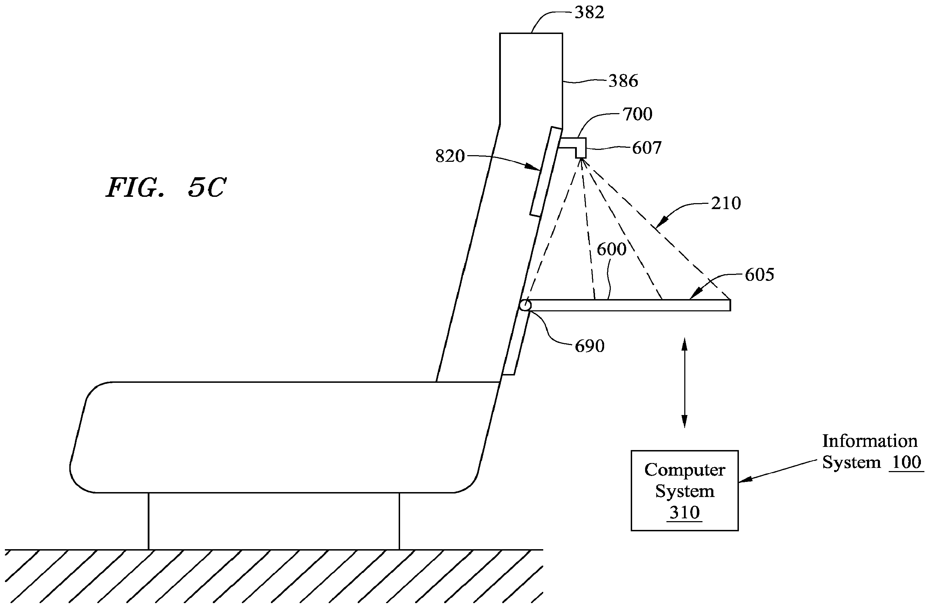

Alternatively, and/or additionally, the projection system 700 can be disposed at a suitable region of the user seat 382. The projection system 700, for example, can be associated with the seatback 286 of the user seat 382. Turning to Fig. 5C, the projection system 700 is shown as being integrated with the tray latch assembly 607. The projected content 210 thereby can be projected downwardly onto the capacitive sensor system 615. As desired, the projection system 700 and the tray latch assembly 607 can be integrated into a projector/tray latch assembly 820.

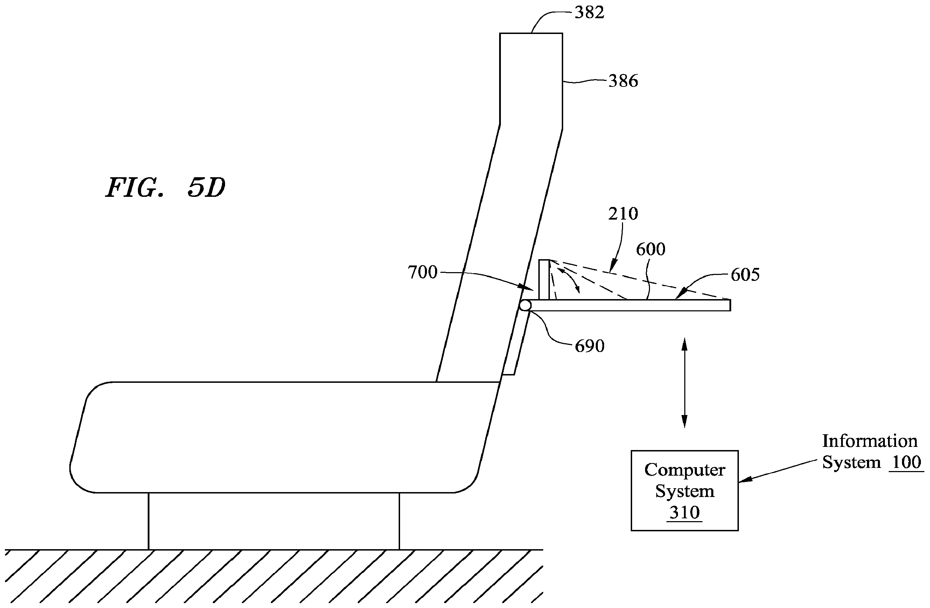

The projection system 700 likewise can be integrated with the food tray 605 of the user seat 382 as illustrated in Fig. 5D. In one embodiment, the projection system 700 can be provided via the base 620 (shown in Fig. 4). The projection system 700 can be coupled with the base 620 in any conventional manner. Fig. 5D shows that the projection system 700 can be rotatably coupled with the base 620 such that a positioning of the projection system 700 can be adjusted. In other words, the projection system 700 can be adjusted between a stowed position and a deployed position, wherein the projected content 210 can be projected onto the capacitive sensor system 615. Advantageously, the projection system 700 can be adjusted into the stowed position when the touch film interface system 600 is not in use and/or when the food tray 605 is to be placed into the stowed position.

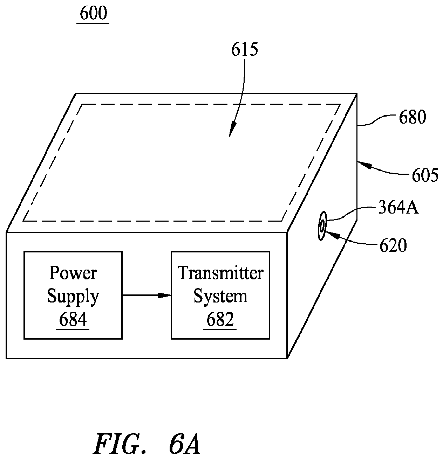

As desired, the touch film interface system 600 can include one or more optional communication ports 620 as illustrated in Figs. 6A-B. In one embodiment, the communication port 620 can comprise an audio port (or jack) 364A for coupling with a pair of headphones. The user thereby can hear audible information provided by the computer system 310 (shown in Fig. 1A). Alternatively, and/or additionally, the communication port 620 can include a peripheral device port 368 for coupling the touch film interface system 600 with a conventional peripheral device (not shown). If the peripheral device comprises a flash memory device, for example, the touch film interface system 600 can include a flash memory reader/writer (not shown) for exchanging content between the flash memory device and the computer system 310. The flash memory reader can facilitate content sharing among the users.

The touch film interface system 600, in operation, can advantageously support trends in social media and/or networking by enabling users to share their personal experiences, including travel experiences, via the computer system 310. In other words, the users can share their personal photographs, notes and, as desired, drawings created via the capacitive sensor system 615 itself. The touch film interface system 600 likewise can enable social communication and games. For example, one user can write a note on the touch film interface system 600, virtually crush the note into a ball and bat it to another user. Another example is games, in which two adjacent users can play air hockey against each other; one paddle on a first touch film interface system 600, and the other on a second touch film interface system 600. The puck travels between the first and second touch film interface systems 600. The touch film interface system 600 likewise can support an ability to create art on the touch film interface system 600, then share the art with others users and/or import the art into compatible games, as well as import into the interactive of an embedded information system 100 (shown in Figs. 5A-C) to personalize.

In the manner discussed in more detail above with reference to Figs. 1A-B, the touch film interface system 600 can be used in conjunction with a video presentation system 362 (shown in Fig. 9) and/or an audio presentation system 364 (shown in Fig. 9) disposed at the user seat 382. The user thereby can activate the touch film interface system 600 to interact with the computer system 310 while viewing entertainment content, such as a movie or other application, via the video presentation system 362 (shown in Fig. 9) and/or the audio presentation system 364. The touch film interface system 600 thereby can enable the user to multitask. As desired, the touch film interface system 600 likewise can be utilized to present the entertainment content as a primary display system and/or as an auxiliary display system to the video presentation system 362.

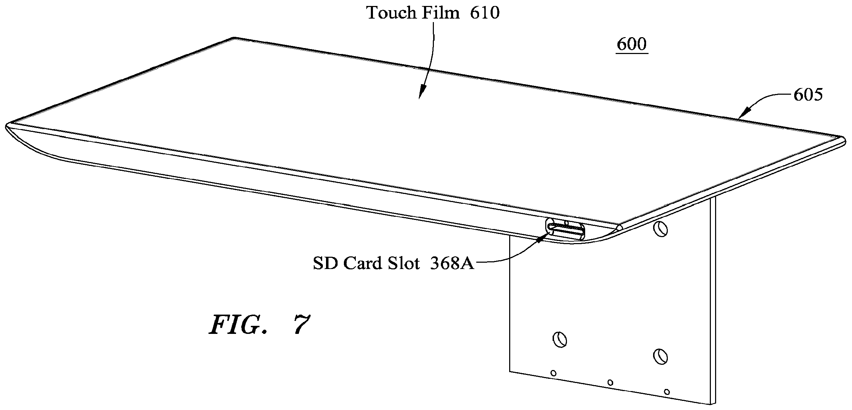

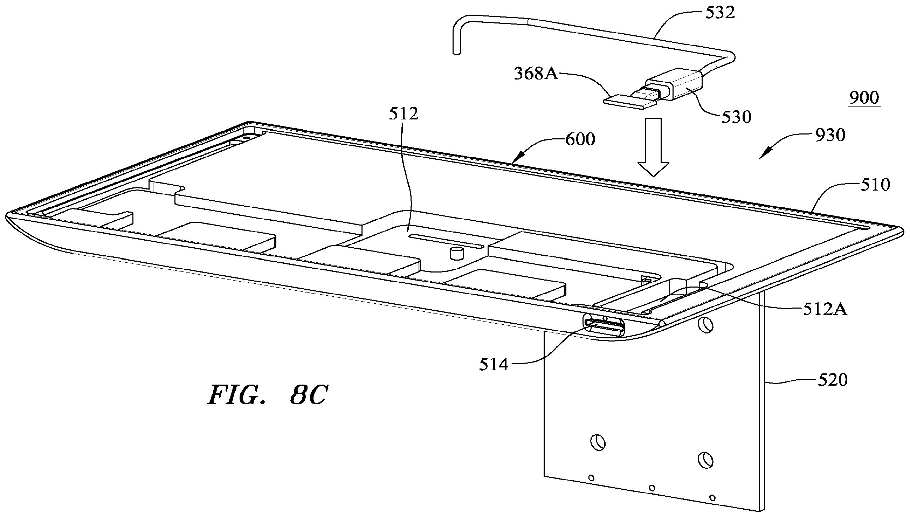

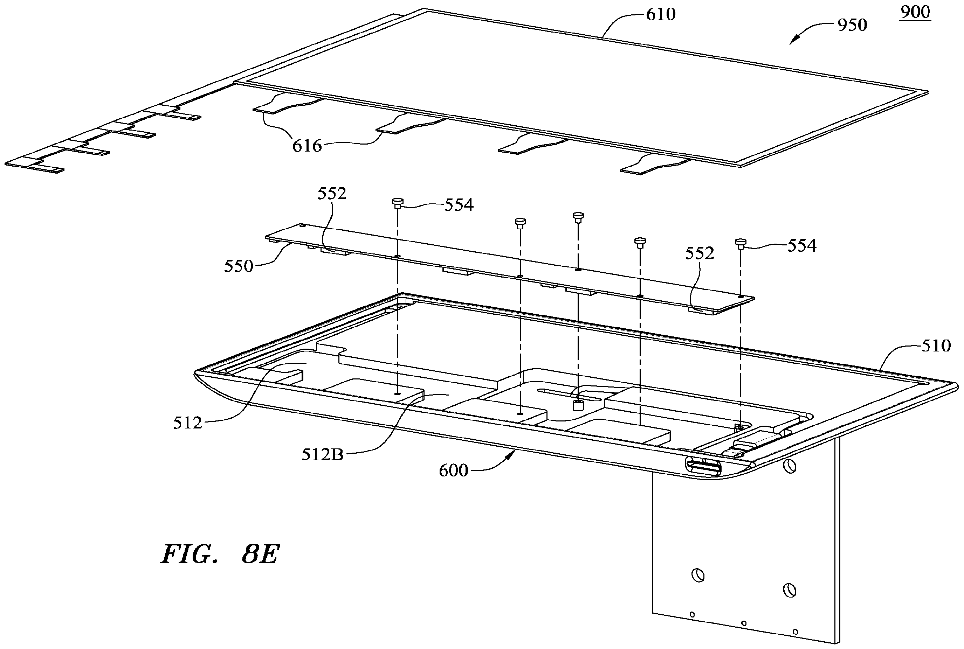

Another preferred embodiment of the touch film interface system 600 is shown in Fig. 7. Turning to Fig. 7, the touch film interface system 600 can be provided as a touchable, interactive airplane food tray 605. The touch film interface system 600 is shown as including a touchable surface 610. Preferably, the touchable surface 610 is provided by a projected capacitive film, which has been adhered to an underside of a top surface of the food tray 605. An electronic printed circuit board 550 (shown in Fig. 8E) can be disposed inside the food tray 605 to control the touchable film surface 610. A Secure Digital (SD) and/or Secure Digital High-Capacity (SDHC) memory card reader 530 (shown in Fig. 8C) can be disposed within the food tray 605. As illustrated in Fig. 7, the Secure Digital (SD) and/or Secure Digital High-Capacity (SDHC) memory card reader 530 or other form of portable solid state memory can be accessible via personal memory device connector 368A, which is provided along a selected edge of the food tray 605. The personal memory device connector 368A enables users to couple their SD card with the memory card reader 530 of the touch film interface system 600, and view photographs on the touch film interface system 600. The photographs can be sorted, arranged, modified and sent to social sites like Facebook and/or shared with other users. As desired, the photographs can be stretched to fill two or more touch film interface system 600 if desired.

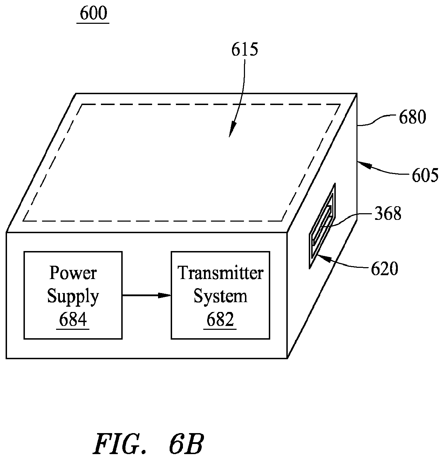

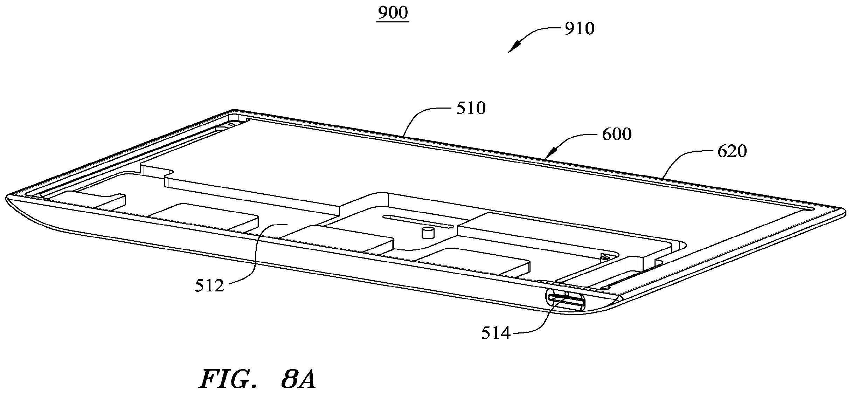

Figs. 8A-H illustrate one method 900 for manufacturing the touch film interface system 600 of Fig. 7. Turning to Fig. 8A, the method 900 is shown to begin, at 910, by providing a chassis 510 for the base 610 of the touch film interface system 600. The chassis 510 can be formed from any suitable material, such as plastic and/or metal, and can define an internal channel 512 for receiving the internal components, such as the transmitter system 682 and/or the internal power supply 684 (shown in Fig. 6B), of the touch film interface system 600. The chassis 510 likewise can form a connector opening 514 for receiving the personal memory device connector 368A (shown in Fig. 7).

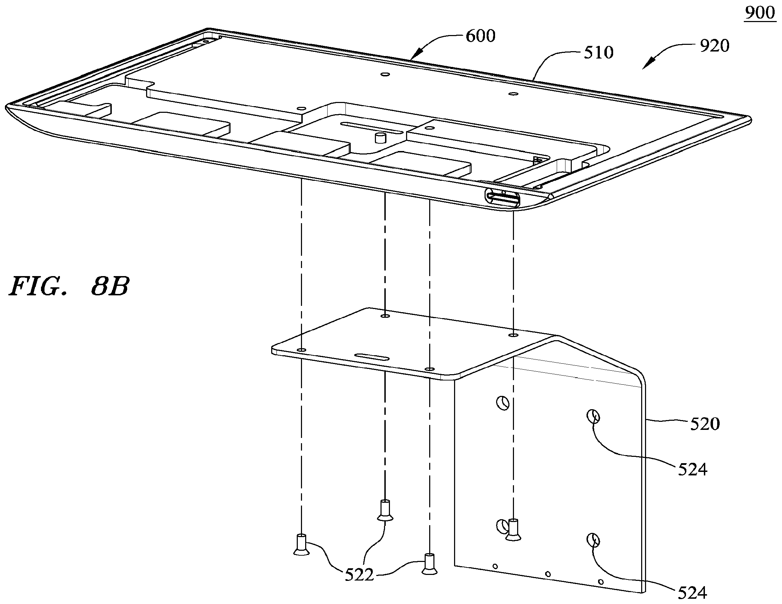

As desired, the chassis 510 can be coupled, at 920, with a mounting bracket 520 as illustrated in Fig. 8B. The mounting bracket 520 can be formed from any suitable material, such as plastic and/or metal, and can be coupled with the chassis 510 in any conventional manner. Fig. 8B shows the chassis 510 and the mounting bracket 520 as being coupled via a plurality of fasteners 522. The mounting bracket 520 enables the touch film interface system 600 to be installed at the user seat 382 (shown in Figs. 5A-D) and preferably forms one or more openings 524 for facilitating installation of the touch film interface system 600. The openings 524 can be provided with any preselected hole pattern that is compatible with the user seat 382.

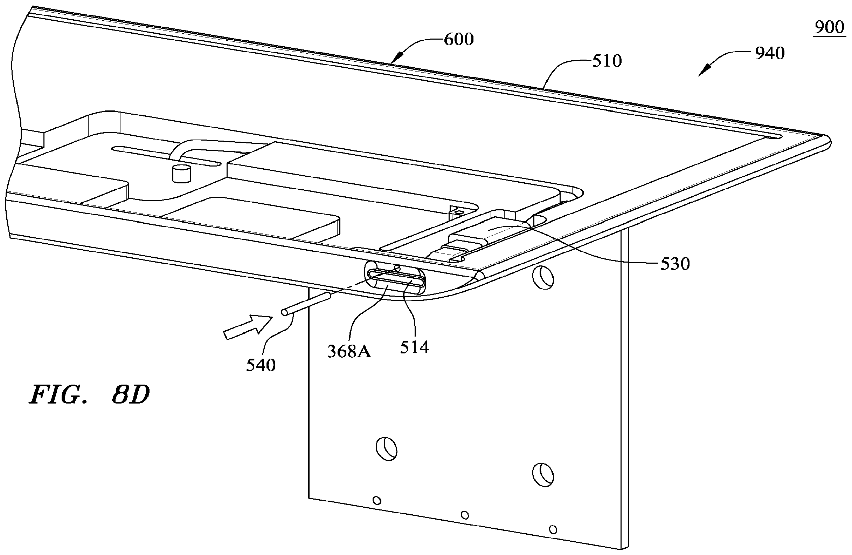

Installation of the memory card reader 530 is illustrated at 903 in Fig. 8C. As shown in Fig. 8C, the memory card reader 530 can be disposed within the internal channel 512 of the chassis 510. The internal channel 512 defines a reader channel region 512A that is formed for receiving the memory card reader 530. The reader channel region 512A preferably is formed to inhibit the installed memory card reader 530 from moving within the chassis 510. As desired, the memory card reader 530 can be affixed in place, such as by an adhesive or potting material. The memory card reader 530 can include the personal memory device connector 368A and an optional communication cable assembly 532. When the memory card reader 530 is properly installed, the personal memory device connector 368A can be received by the connector opening 514 of the chassis 510; whereas, the communication cable assembly 532 can be placed in the internal channel 512. Fig. 8D shows that a lightpipe 540 can be installed, at 540, adjacent to the personal memory device connector 368A within the connector opening 514.

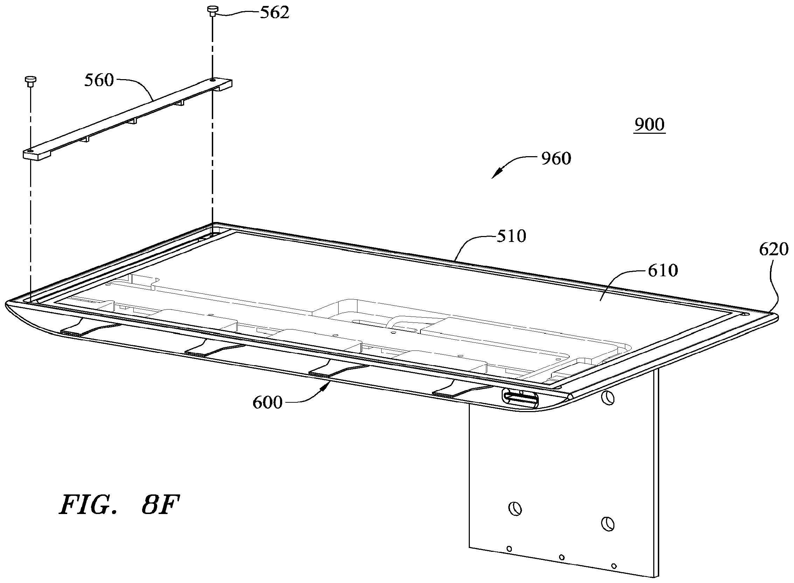

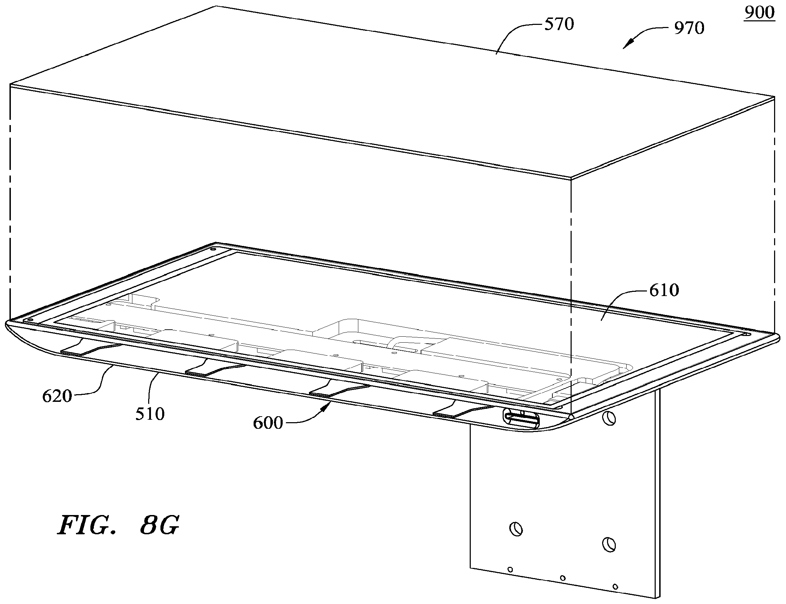

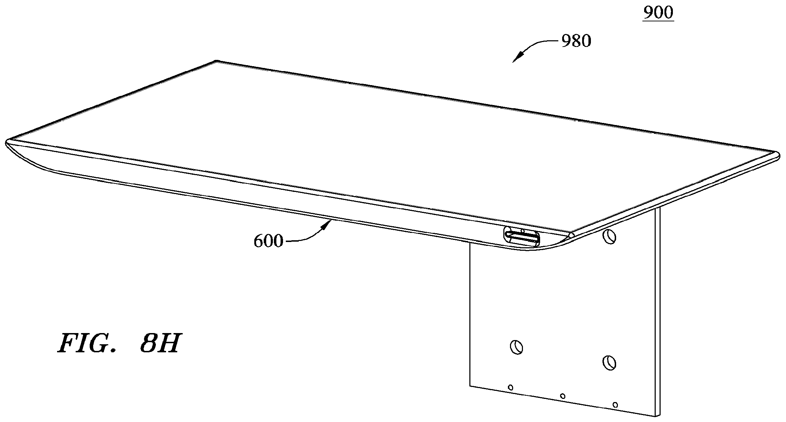

Turning to Fig. 8E, the touchable film surface 610, at 950, can be coupled with the printed circuit board (PCB) 550. The touchable film surface 610 and the printed circuit board 550 can be coupled in any conventional manner. The touchable film surface 610, for example, can include one or more edge connectors 616 for cooperating with one or more connector regions 552 provided by the printed circuit board 550. The touchable film surface 610 and the printed circuit board 550 can be coupled with the chassis 510 such that the printed circuit board 550 is disposed within a PCB channel region 512B of the internal channel 512. The printed circuit board 550 can be coupled with the chassis 510 in any conventional manner. Fig. 8E shows the printed circuit board 550 and the chassis 510 as being coupled via a plurality of fasteners 554. The touchable film surface 610 preferably is coupled with the chassis 510 via a pressure-sensitive adhesive. As desired, a flexible printed circuit (FPC) support 560 can be coupled, at 960, with the chassis 510 via a plurality of fasteners 562 as illustrated in Fig. 8F, and/or an interface cover 570 can be attached, at 970, with the chassis 510 via a pressure-sensitive adhesive as illustrated in Fig. 8G. The resultant touch film interface system 600 is shown, at 980 in Fig. 8H.

In the manner set forth above, the touch film interface system 600 can be used in conjunction with a video presentation system 362 and/or an audio presentation system 364 for interacting with the computer system 310. Turning to Fig. 9, an information system 100 is shown, wherein the information system 100 includes a computer system 310 that is in communication with the touch film interface system 600, a video presentation system 362, and an audio presentation system 364. The touch film interface system 600, the video presentation system 362, and the audio presentation system 364 preferably are disposed at a user seat 382. The video presentation system 362, for example, can be provided as a seatback display system and/or an overhead display system; whereas, the audio presentation system 364 can include a speaker system and/or an audio connector disposed at the armrest 388 of the user seat 382.

A user, thereby, can employ the touch film interface system 600 as an input device for providing information, such as control commands, data, or other information, to the computer system 310 and can view a response, such as viewing content 210 or other information, from the computer system 310 via the video presentation system 362 and/or the audio presentation system 364. In one embodiment, the touch film interface system 600 can serve as a conventional computer input device, such as a keyboard or mouse; whereas, the video presentation system 362 and/or the audio presentation system 364 can be provided as conventional computer output devices. The touch film interface system 600 likewise can provide a diverse assortment of user interface systems for interacting with the computer system 310 in the manners set forth in more detail above. In other words, the user interface system provided by the touch film interface system 600 can be fully customizable and/ reconfigurable, as desired.

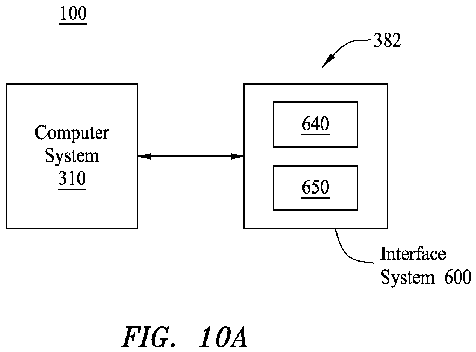

Alternatively, and/or additionally, the information system 100 advantageously can support interactions with the computer system 310 solely via the touch film interface system 600. In other words, the user seat 382 includes only the touch film interface system 600 for interacting with the computer system 310. The touch film interface system 600 thereby can include an interface video system 640 and/or an interface audio system 650 as illustrated in Fig. 10A. The interface video system 640 enables the touch film interface system 600 to present a video portion of viewing content 210 or other information provided by the computer system 310 in the manner set forth above with reference to the video presentation system 362 (shown in Fig. 9); whereas, the interface audio system 650 permits the touch film interface system 600 to present an audio portion of the viewing content 210 or other information provided by the computer system 310 in the manner set forth above with reference to the audio presentation system 364 (shown in Fig. 9). The interface video system 640, for example, can comprise a touchscreen display system of any conventional kind. In one embodiment, the Thereby, a separate video presentation system 362 and/or audio presentation system 364 need not be installed at the user seat 382.

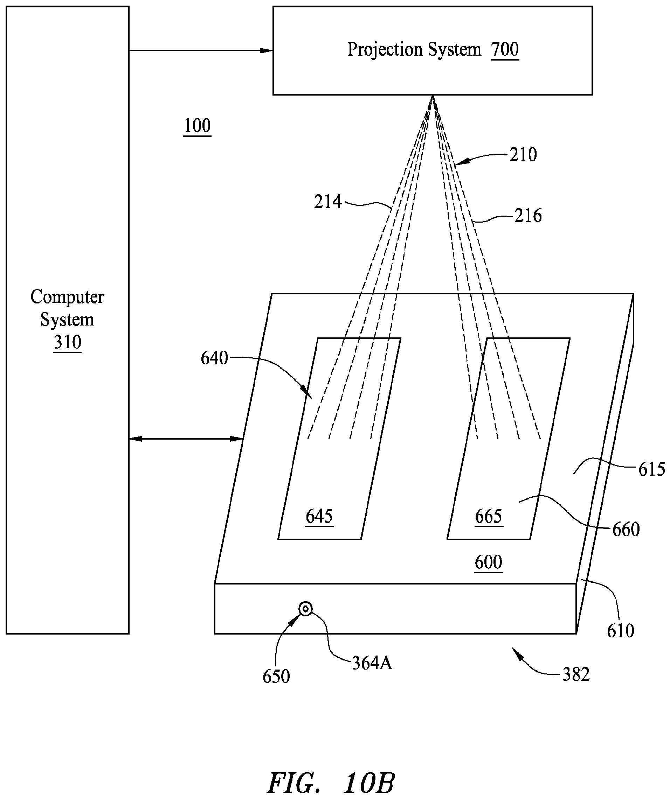

One exemplary embodiment of the touch film interface system 600 is shown in Fig. 10B. Turning to Fig. 10B, the selected surface of the touch film interface system 600 is illustrated as including an input region 665 and a video presentation region 645. In other words, the touch film interface system 600 provides an input system 660 via the input region 665 and the interface video system 640 via the video presentation region 645. The input region 665 of the input system 660 comprises a selected region of the touch film system (or layer), such as a capacitive sensor system 615, wherein information, such as control commands, data, or other information, can be entered for dispatch to the computer system 310. The video presentation region 645 likewise can comprise a selected region of the touch film interface system 600. As desired, video presentation region 645 can include a portion of the capacitive sensor system 615.

In the manner set forth above with reference to Figs. 5A-D, the touch film interface system 600 can include a projection system 700 for shining selected viewing content 210 onto the base 620. Fig. 10B shows that the projection system 700 can shine control viewing content 216 onto the input region 665. The control viewing content 216 can include images of one or more user controls, such as a menu system and/or keyboard. The computer system 310 can correlate the projected control viewing content 216 with associated areas within the input region 665 to form the input system 660 in the manner discussed above. The user thereby can interact with the computer system 310 via the input system 660.

Similarly, the projection system 700 can shine video viewing content 214 onto the video presentation region 645. The video viewing content 214 can include the video portion of viewing content 210 or other information provided by the computer system 310. The video presentation region 645 advantageously can present the video viewing content 214 projected by the projection system 700 in the manner that the video presentation system 362 (shown in Fig. 9) presents video content. Accordingly, the input region 665 and the video presentation region 645 enable a user to communicate with the computer system 310 solely via the touch film interface system 600. Although shown and described as comprising separate regions for purposes of illustration only, the input region 665 and the video presentation region 645 can at least partially overlap, as desired. In one embodiment, the input region 665 and the video presentation region 645 comprise the same region.

Fig. 10B further shows that the touch film interface system 600 can include an optional interface audio system 650 for permitting the touch film interface system 600 to present the audio portion of the viewing content 210 or other information provided by the computer system 310. The interface audio system 650 can be provided in any conventional manner, including one or more speaker systems (not shown). As illustrated in Fig. 10B, the interface audio system 650 can include at least one audio port (or jack) 364A for coupling with a pair of headphones. The interface audio system 650 likewise supports communications with the computer system 310 solely via the touch film interface system 600.

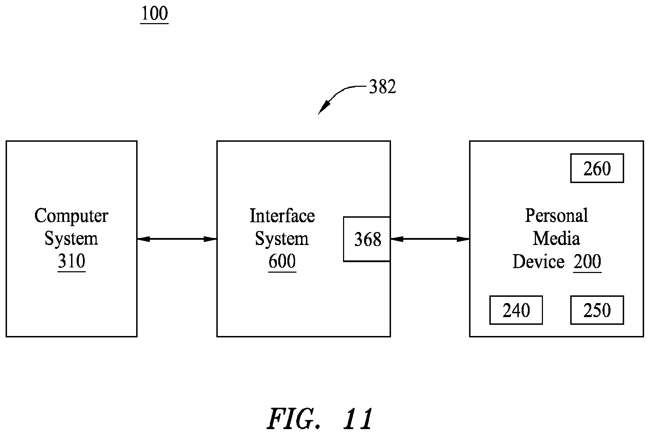

Another exemplary embodiment of the touch film interface system 600 is shown in Fig. 11. In the manner discussed in more detail above with reference to Fig. 6B, the touch film interface system 600 can include a peripheral device port 368 for coupling the touch film interface system 600 with a conventional peripheral device, such as a portable media device 200. The peripheral device port 368 can be provided in any conventional manner and can be adapted to support conventional wired and/or wireless communication with a selection of personal media devices 200 having a variety of communication agreements (or protocols). As desired, the peripheral device port 368 can include one or more communication ports (or connectors) each for supporting a selected connection agreement.

Exemplary communication ports for the peripheral device port 368 can include a Universal Serial Bus (USB)-compatible communication port and/or a Deutsches Institut fur Normung (DIN) type connector for communication with an iPod® (iPad® or iPhone®) digital electronic media device in the manner set forth in the co-pending United States patent applications, entitled "SYSTEM AND METHOD FOR INTERFACING A PORTABLE MEDIA DEVICE WITH A VEHICLE INFORMATION SYSTEM," US 2009/0119721 A1, filed on September 15, 2008; entitled "MEDIA DEVICE INTERFACE SYSTEM AND METHOD FOR VEHICLE INFORMATION SYSTEMS," US 2009/0083805 A1 filed September 15, 2008; and entitled "MEDIA DEVICE INTERFACE SYSTEM AND METHOD FOR VEHICLE INFORMATION SYSTEMS," US 2009/0077595 A1, filed September 15, 2008.

The personal media device 200 can include a video display system 240 and/or an audio system 250 and can be provided as a handheld device, such as a laptop computer, a palmtop computer, a personal digital assistant (PDA), cellular telephone, an iPod® (iPad® or iPhone®) digital electronic media device, and/or a MPEG Audio Layer 3 (MP3) device. Illustrative personal media devices 200 are shown and described in the co-pending United States patent applications, entitled "SYSTEM AND METHOD FOR DOWNLOADING FILES," US 2005/0044564 A1, filed on February 4, 2004; entitled "PORTABLE MEDIA DEVICE AND METHOD FOR PRESENTING VIEWING CONTENT DURING TRAVEL," US 2006/0107295 A1, filed on June 15, 2005; entitled "SYSTEM AND METHOD FOR RECEIVING BROADCAST CONTENT ON A MOBILE PLATFORM DURING INTERNATIONAL TRAVEL," US 2006/0212909 A1, filed on November 7, 2005; entitled "SYSTEM AND METHOD FOR INTERFACING A PORTABLE MEDIA DEVICE WITH A VEHICLE INFORMATION SYSTEM," US 2009/0119721 A1, filed on September 15, 2008; entitled "MEDIA DEVICE INTERFACE SYSTEM AND METHOD FOR VEHICLE INFORMATION SYSTEMS," US 2009/0083805 A1, filed September 15, 2008; entitled "MEDIA DEVICE INTERFACE SYSTEM AND METHOD FOR VEHICLE INFORMATION SYSTEMS," US 2009/0077595 A1, filed September 15, 2008; and entitled "PORTABLE USER CONTROL DEVICE AND METHOD FOR VEHICLE INFORMATION SYSTEMS," US 2009/0079705 A1, filed on September 15, 2008.

When coupled with the portable media device 200, the touch film interface system 600 advantageously can enable the user to communicate with the computer system 310 via the touch film system (or layer), such as a capacitive sensor system 615, of the touch film interface system 600 and/or a data input system 260, such as a keyboard, of the portable media device 200. The touch film interface system 600 likewise can provide viewing content 210 or other information provided by the computer system 310 to the portable media device 200 via the peripheral device port 368. A video portion of the viewing content 210 or other information thereby can be presented via the video display system 240 of the portable media device 200 in the manner that the video presentation system 362 (shown in Fig. 9) presents video content. Alternatively, and/or additionally, an audio portion of the viewing content 210 or other information can be presented via the audio system 250 of the portable media device 200 in the manner that the audio presentation system 364 (shown in Fig. 9) presents audio content.

The described embodiments are susceptible to various modifications and alternative forms, and specific examples thereof have been shown by way of example in the drawings and are herein described in detail. It should be understood, however, that the described embodiments are not to be limited to the particular forms or methods disclosed, but to the contrary, the present disclosure is to cover all modifications, equivalents, and alternatives.

## Claims

1. An interface system, comprising:
a front-projection system (700);
a touch film interface system (600) for interacting with a computer system (310), the touch film interface system (600) being provided as a food tray (605), wherein the front-projection system (700) is integrated with the food tray (605), the touch film interface system (600) comprising:
a base (680) for coupling with a user seat (382);
a touch film system (610) being coupled with said base (680) and being configured to provide a user interface for communicating with the computer system (310), said touch film system (610) including an input region (665) and a video presentation region (645), wherein the front-projection system (700) is configured to front-project onto said input region (665) control viewing content (216) with images of one or more user controls and correlated with associated areas within said input region (665) to form an input system (660) for providing user control instructions to the computer system (310),
wherein the front-projection system (700) is configured to front-project onto said video presentation region (645) video viewing content (214) provided by the computer system (310) in response to manipulation of said input system (660), and wherein the front-projection system (700) is integrated with the food tray (605).

2. The interface system of claim 1,
wherein said touch film interface system (600) is installed at one of a seatback (386) and an armrest (388) of the user seat (382),
wherein said touch film system (610) is removably coupled with said base (680), wherein said base (680) is removably coupled with the user seat (382).

3. The interface system of claim 1 or claim 2, further comprising a transmitter system (682) for communicating with the computer system (310) and a rechargeable power supply (684) for providing power to said transmitter system (682), wherein said rechargeable power supply (684) includes at least one ultracapacitor, wherein said interface system is configured to transition between a deployed position and a stowed position, and wherein said rechargeable power supply is recharged by a charging system disposed within the user seat (382) when said touch film interface system (600) is disposed in the stowed position.

4. The interface system of any of the above claims, further comprising a plurality of different user interfaces, said different user interfaces including a plurality of keyboards (612) with predetermined keyboard layouts and predetermined keyboard languages, and
wherein said touch film system (610) includes a tactile keyboard (612) with a plurality of raised keys.

5. The interface system of any of the above claims, wherein the front-projection system (700) is configured to shine a menu system onto said touch film system (610), wherein the computer system (310) is configured to correlate the projected menu system with associated regions of said touch film system (610) and wherein activation of a selected region of said touch film system (610) activates an associated menu option, and wherein said projection system (700) is disposed at said base (680).

6. The interface system of any of the above claims, further comprising a peripheral device port (368) for coupling with a peripheral device such that the peripheral device and the computer system (310) communicate via said touch film interface system (600), wherein said peripheral device port (368) is configured to communicate with a user memory device, and further comprising a memory card reader selected from a group consisting of a Secure Digital, SD, memory card reader and a Secure Digital High-Capacity, SDHC, memory card reader, said memory card reader for exchanging selected content (210) with the user memory device via said peripheral device port (368).

7. The interface system of any of the above claims, wherein interaction with the computer system (310) at the user seat (382) is controlled solely via the user interface provided by said touch film system (610), and
wherein said input region (665) and said video presentation region (645) at least partially overlap.

8. The interface system of claim 7, further comprising a peripheral device port (368) for coupling said base (680) with a portable media device (200) having a data input system (260) and a video display system, (240), wherein, when said base (680) is coupled with the portable media device (200) via said peripheral device port (368), said input system (660) includes the data input system (260) of the portable media device (200), and the video display system (240) is configured to present the video viewing content (210).

9. A user seat (382), comprising:
a seatback (386);
an armrest (388); and
an interface system for communicating with a computer system (310), said interface system being coupled with at least one of said seatback (386) and said armrest (388) and being provided in accordance with any one of the above claims.

10. A vehicle information system (100) suitable for installation aboard a passenger vehicle, comprising:
a computer system (310); and
a plurality of interface systems for communicating with the computer system (310), said interface systems being coupled with at least one of a seatback (386) and a armrest (388) of an associated passenger seat (382) and being provided in accordance with any one of claims 1-8,
wherein said interface systems enable passengers traveling aboard the passenger vehicle to communicate via said computer system (310).

11. An aircraft, comprising:
a fuselage;
a plurality of passenger seats (382) arranged within the fuselage; and
a vehicle information system, (100) coupled with said fuselage and being provided in accordance with claim 10.

12. A method for providing a touch film interface system (600) as a food tray (605), the method comprising:
providing a base (680) for coupling with a user seat (382);
providing a front-projection system (700), wherein the front-projection system (700) is integrated with the food tray (605);
coupling a touch film system (610) with said base (680), said touch film system (610) being configured to provide a user interface for communicating with the computer system (310), said touch film system (610) including an input region (665) and a video presentation region (645);
front-projecting, by said front-projection system (700), control viewing content (216) with images of one or more user controls onto said input region (665) and correlated with associated areas within said input region (665) to form an input system (660) for providing user control instructions to the computer system (310); and
front-projecting, by said front-projection system (700), video viewing content (214) provided by the computer system (310) onto said video presentation region (645) in response to manipulation of said input system (660).

## Patentansprüche

1. Schnittstellensystem, umfassend:
ein Frontprojektionssystem (700);
ein Berührungsfolien-Schnittstellensystem (600) zum Interagieren mit einem Computersystem (310), wobei das Berührungsfolien-Schnittstellensystem (600) als ein Nahrungsmitteltablett (605) bereitgestellt wird, wobei das Frontprojektionssystem (700) mit dem Nahrungsmitteltablett (605) integriert ist, das Berührungsfolien-Schnittstellensystem (600) umfassend:
eine Basis (680) zum Koppeln mit einem Benutzersitz (382);
ein Berührungsfoliensystem (610), das mit der Basis (680) gekoppelt ist und konfiguriert ist zum Bereitstellen einer Benutzerschnittstelle zum Kommunizieren mit dem Computersystem (310), wobei das Berührungsfoliensystem (610) eine Eingaberegion (665) und eine Videopräsentationsregion (645) enthält, wobei das Frontprojektionssystem (700) konfiguriert ist zum Frontprojizieren, auf die Eingaberegion (665), von Steueransichtsinhalt (216) mit Bildern eines oder mehrerer Benutzerbedienelemente und korreliert mit assoziierten Bereichen in der Eingaberegion (665), um ein Eingabesystem (660) zum Bereitstellen von Benutzersteuerungsanweisungen für das Computersystem (310) zu bilden,
wobei das Frontprojektionssystem (700) konfiguriert ist zum Frontprojizieren von Videoansichtsinhalt (214), bereitgestellt durch das Computersystem (310), auf die Videopräsentationsregion (645) als Reaktion auf Manipulation des Eingabesystems (660) und wobei das Frontprojektionssystem (700) mit dem Nahrungsmitteltablett (605) integriert ist.

2. Schnittstellensystem nach Anspruch 1,
wobei das Berührungsfolien-Schnittstellensystem (600) an einer Rückenlehne (386) und einer Armlehne (388) des Benutzersitzes (382) installiert ist,
wobei das Berührungsfoliensystem (610) mit der Basis (680) entfernbar gekoppelt ist,
wobei die Basis (680) mit dem Benutzersitz (382) entfernbar gekoppelt ist.

3. Schnittstellensystem nach Anspruch 1 oder Anspruch 2, ferner umfassend ein Sendersystem (682) zum Kommunizieren mit dem Computersystem (310) und eine wiederaufladbare Leistungsversorgung (684) zum Bereitstellen, dem Sendersystem (682), von Leistung, wobei die wiederaufladbare Leistungsversorgung (684) mindestens einen hochkapazitiven Kondensator enthält, wobei das Schnittstellensystem zum Übergehen zwischen einer Einsatzposition und einer Verstauposition konfiguriert ist und wobei die wiederaufladbare Leistungsversorgung durch ein in dem Benutzersitz (382) angeordnetes Ladesystem wiederaufgeladen wird, wenn das Berührungsfolien-Schnittstellensystem (600) in der Verstauposition angeordnet ist.

4. Schnittstellensystem nach einem der vorstehenden Ansprüche, ferner umfassend eine Vielzahl von verschiedenen Benutzerschnittstellen, wobei die verschiedenen Benutzerschnittstellen eine Vielzahl von Tastaturen (612) mit im Voraus bestimmten Tastaturanordnungen und im Voraus bestimmten Tastatursprachen enthalten, und
wobei das Berührungsfoliensystem (610) eine taktile Tastatur (612) mit einer Vielzahl von erhöhten Tasten enthält.

5. Schnittstellensystem nach einem der vorstehenden Ansprüche, wobei das Frontprojektionssystem (700) konfiguriert ist, ein Menüsystem auf das Berührungsfoliensystem (610) zu strahlen, wobei das Computersystem (310) konfiguriert ist, das projizierte Menüsystem mit assoziierten Regionen des Berührungsfoliensystems (610) zu korrelieren, und wobei Aktivierung einer ausgewählten Region des Berührungsfoliensystems (610) eine assoziierte Menüoption aktiviert und wobei das Projektionssystem (700) an der Basis (680) angeordnet ist.

6. Schnittstellensystem nach einem der vorstehenden Ansprüche, ferner umfassend einen Anschluss für eine periphere Vorrichtung (368) zum Koppeln mit einer peripheren Vorrichtung derart, dass die periphere Vorrichtung und das Computersystem (310) über das Berührungsfolien-Schnittstellensystem (600) kommunizieren, wobei der Anschluss für eine periphere Vorrichtung (368) konfiguriert ist, mit einer Benutzerspeichervorrichtung zu kommunizieren, und ferner umfassend einen Speicherkartenleser, ausgewählt aus einer Gruppe, bestehend aus einem Secure-Digital- bzw. SD-Speicherkartenleser und einem Secure-Digital-High-Capacity- bzw. SDHC-Speicherkartenleser, wobei der Speicherkartenleser zum Austauschen von ausgewähltem Inhalt (210) mit dem Benutzerspeicher über den Anschluss für eine periphere Vorrichtung (368) dient.

7. Schnittstellensystem nach einem der vorstehenden Ansprüche,
wobei Interagieren mit dem Computersystem (310) an dem Benutzersitz (382) ausschließlich über die durch das Berührungsfoliensystem (610) bereitgestellte Benutzerschnittstelle gesteuert wird und
wobei die Eingaberegion (665) und die Videopräsentationsregion (645) sich mindestens teilweise überlappen.

8. Schnittstellensystem nach Anspruch 7, ferner umfassend einen Anschluss für eine periphere Vorrichtung (368) zum Koppeln der Basis (680) mit einer tragbaren Medienvorrichtung (200), die ein Dateneingabesystem (260) und ein Videoanzeigesystem (240) aufweist, wobei, wenn die Basis (680) mit der tragbaren Medienvorrichtung (200) über den Anschluss für eine periphere Vorrichtung (368) gekoppelt ist, das Eingabesystem (660) das Dateneingabesystem (260) der tragbaren Medienvorrichtung (200) enthält und das Videoanzeigesystem (240) konfiguriert ist, den Videoansichtsinhalt (210) zu präsentieren.

9. Benutzersitz (382), umfassend:
eine Rückenlehne (386);
eine Armlehne (388); und
ein Schnittstellensystem zum Kommunizieren mit einem Computersystem (310), wobei das Schnittstellensystem mit mindestens einer der Rückenlehne (386) und der Armlehne (388) gekoppelt ist und gemäß einem der vorstehenden Ansprüche bereitgestellt wird.

10. Fahrzeuginformationssystem (100), geeignet für Installation an Bord eines Passagierfahrzeugs, umfassend:
ein Computersystem (310); und
eine Vielzahl von Schnittstellensystemen zum Kommunizieren mit dem Computersystem (310), wobei die Schnittstellensysteme mit mindestens einer einer Rückenlehne (386) und einer Armlehne (388) eines assoziierten Passagiersitzes (382) gekoppelt sind und gemäß einem der Ansprüche 1-8 bereitgestellt werden,
wobei die Schnittstellensysteme Passagiere, die an Bord des Passagierfahrzeugs reisen, in die Lage versetzen, mit dem Computersystem (310) zu kommunizieren.

11. Luftfahrzeug, umfassend:
einen Rumpf;
eine Vielzahl von Passagiersitzen (382), die in dem Rumpf angeordnet sind; und
ein Fahrzeuginformationssystem (100), gekoppelt mit dem Rumpf und gemäß Anspruch 10 bereitgestellt.

12. Verfahren zum Bereitstellen eines Berührungsfolien-Schnittstellensystems (500) als ein Nahrungsmitteltablett (605), das Verfahren umfassend:
Bereitstellen einer Basis (680) zum Koppeln mit einem Benutzersitz (382);
Bereitstellen eines Frontprojektionssystems (700), wobei das Frontprojektionssystem (700) mit dem Nahrungsmitteltablett (605) integriert ist;
Koppeln eines Berührungsfoliensystems (610) mit der Basis (680), wobei das Berührungsfoliensystem (610) konfiguriert ist, eine Benutzerschnittstelle zum Kommunizieren mit dem Computersystem (310) bereitzustellen, wobei das Berührungsfoliensystem (610) eine Eingaberegion (665) und eine Videopräsentationsregion (645) enthält;
Frontprojizieren, durch das Frontprojektionssystem (700), von Steueransichtsinhalt (216) mit Bildern eines oder mehrerer Benutzerbedienelemente auf die Eingaberegion (665) und korreliert mit assoziierten Bereichen in der Eingaberegion (665), um ein Eingabesystem (660) zum Bereitstellen von Benutzersteuerungsanweisungen für das Computersystem (310) zu bilden; und
Frontprojizieren, durch das Frontprojektionssystem (700), von Videoansichtsinhalt (214), bereitgestellt durch das Computersystem (310), auf die Videopräsentationsregion (645) als Reaktion auf Manipulation des Eingabesystems (660).

## Revendications

1. Système d'interface, comprenant :
un système de projection frontale (700) ;
un système d'interface à film tactile (600) permettant d'interagir avec un système informatique (310), le système d'interface à film tactile (600) se présentant sous forme d'une tablette repas (605), le système de projection frontale (700) étant intégré à la tablette repas (605), le système d'interface à film tactile (600) comprenant :
une base (680) destinée à être accouplée à un siège d'utilisateur (382) ;
un système de film tactile (610) destiné à être accouplé à ladite base (680) et configuré pour fournir une interface d'utilisateur permettant de communiquer avec le système informatique (310), ledit système de film tactile (610) comportant une région d'entrée (665) et une région de présentation de vidéo (645), le système de projection frontale (700) étant configuré pour projeter frontalement, sur ladite région d'entrée (665), un contenu de visualisation de commandes (216) comportant des images d'une ou de plusieurs commandes d'utilisateur et corrélé à des zones associées au sein de ladite région d'entrée (665) pour former un système d'entrée (660) permettant de fournir des instructions de commandes d'utilisateur au système informatique (310),
dans lequel le système de projection frontale (700) est configuré pour projeter frontalement, sur ladite région de présentation de vidéo (645), un contenu de visualisation de vidéo (214) fourni par le système informatique (310) en réponse à une manipulation dudit système d'entrée (660), et dans lequel le système de projection frontale (700) est intégré à la tablette repas (605).

2. Système d'interface selon la revendication 1,
dans lequel ledit système d'interface à film tactile (600) est installé au niveau d'un dossier (386) ou bien d'un accoudoir (388) du siège d'utilisateur (382),
dans lequel ledit système de film tactile (610) est accouplé de manière amovible à ladite base (680),
dans lequel ladite base (680) est accouplée de manière amovible au siège d'utilisateur (382).

3. Système d'interface selon la revendication 1 ou la revendication 2, comprenant en outre un système émetteur (682) permettant de communiquer avec le système informatique (310) et une alimentation en énergie rechargeable (684) destinée à fournir de l'énergie audit système émetteur (682), dans lequel ladite alimentation en énergie rechargeable (684) comporte au moins un supercondensateur, dans lequel ledit système d'interface est configuré pour basculer entre une position déployée et une position rangée, et dans lequel ladite alimentation en énergie rechargeable est rechargée par un système de charge placé à l'intérieur du siège d'utilisateur (382) lorsque ledit système d'interface à film tactile (600) est placé dans la position rangée.

4. Système d'interface selon l'une quelconque des revendications précédentes, comprenant en outre une pluralité d'interfaces d'utilisateur différentes, lesdites interfaces d'utilisateur différentes comportant une pluralité de claviers (612) présentant des dispositions de clavier prédéfinies et des langues de clavier prédéfinies, et
dans lequel ledit système de film tactile (610) comporte un clavier tactile (612) pourvu d'une pluralité de touches en relief.

5. Système d'interface selon l'une quelconque des revendications précédentes, dans lequel le système de projection frontale (700) est configuré pour projeter un système de menu sur ledit système de film tactile (610), dans lequel le système informatique (310) est configuré pour corréler le système de menu projeté à des régions associées dudit système de film tactile (610), et dans lequel l'activation d'une région sélectionnée dudit système de film tactile (610) active une option de menu associée, et dans lequel ledit système de projection (700) est placé au niveau de ladite base (680).

6. Système d'interface selon l'une quelconque des revendications précédentes, comprenant en outre un port (368) pour dispositif périphérique destiné à s'accoupler à un dispositif périphérique de façon à ce que le dispositif périphérique et le système informatique (310) communiquent via ledit système d'interface à film tactile (600), ledit port (368) pour dispositif périphérique étant configuré pour communiquer avec un dispositif mémoire d'utilisateur, et comprenant en outre un lecteur de carte mémoire choisi dans un groupe constitué par un lecteur de carte mémoire de type "Secure Digital", SD, et un lecteur de carte mémoire de type "Secure Digital High-Capacity", SDHC, ledit lecteur de carte mémoire permettant l'échange d'un contenu sélectionné (210) avec le dispositif mémoire d'utilisateur via ledit port (368) pour dispositif périphérique.

7. Système d'interface selon l'une quelconque des revendications précédentes,
dans lequel l'interaction avec le système informatique (310) au niveau du siège d'utilisateur (382) est commandée uniquement via l'interface d'utilisateur fournie par ledit système de film tactile (610), et
dans lequel ladite région d'entrée (665) et ladite région de présentation de vidéo (645) se recouvrent au moins partiellement.

8. Système d'interface selon la revendication 7, comprenant en outre un port (368) pour dispositif périphérique permettant d'accoupler ladite base (680) à un dispositif multimédia portable (200) pourvu d'un système d'entrée de données (260) et d'un système d'affichage de vidéo (240), dans lequel, lorsque ladite base (680) est accouplée au dispositif multimédia portable (200) via ledit port (368) pour dispositif périphérique, ledit système d'entrée (660) comprend le système d'entrée de données (260) du dispositif multimédia portable (200), et le système d'affichage de vidéo (240) est configuré pour présenter le contenu de visualisation de vidéo (210).

9. Siège d'utilisateur (382), comprenant :
un dossier (386) ;
un accoudoir (388) ; et
un système d'interface permettant de communiquer avec un système informatique (310), ledit système d'interface étant accouplé audit dossier (386) et/ou audit accoudoir (388) et se présentant selon l'une quelconque des revendications précédentes.

10. Système d'informations (100) pour véhicule susceptible d'être installé à bord d'un véhicule de transport de passagers, comprenant :
un système informatique (310) ; et
une pluralité de systèmes d'interface permettant de communiquer avec le système informatique (310), lesdits systèmes d'interface étant accouplés à un dossier (386) et/ou un accoudoir (388) d'un siège de passager associé (382), et se présentant selon l'une quelconque des revendications 1 à 8,
dans lequel lesdits systèmes d'interface permettent à des passagers voyageant à bord du véhicule de transport de passagers de communiquer via ledit système informatique (310).

11. Aéronef, comprenant :
un fuselage ;
une pluralité de sièges de passager (382) agencés à l'intérieur du fuselage ; et
un système d'informations (100) pour véhicule accouplé audit fuselage et se présentant selon la revendication 10.

12. Procédé pour fournir un système d'interface à film tactile (600) se présentant sous forme d'une tablette repas (605), le procédé comprenant les étapes consistant à :
fournir une base (680) destinée à être accouplée à un siège d'utilisateur (382) ;
fournir un système de projection frontale (700), le système de projection frontale (700) étant intégré à la tablette repas (605) ;
accoupler un système de film tactile (610) à ladite base (680), ledit système de film tactile (610) étant configuré pour fournir une interface d'utilisateur permettant de communiquer avec le système informatique (310), ledit système de film tactile (610) comportant une région d'entrée (665) et une région de présentation de vidéo (645) ;
projeter frontalement, par ledit système de projection frontale (700), sur ladite région d'entrée (665), un contenu de visualisation de commandes (216) comportant des images d'une ou de plusieurs commandes d'utilisateur et corrélé à des zones associées au sein de ladite région d'entrée (665) pour former un système d'entrée (660) permettant de fournir des instructions de commandes d'utilisateur au système informatique (310) ; et
projeter frontalement, par ledit système de projection frontale (700), sur ladite région de présentation de vidéo (645), un contenu de visualisation de vidéo (214) fourni par le système informatique (310) en réponse à une manipulation dudit système d'entrée (660).
